(19) Europäisches Patentamt
European Patent Office
Office européen des brevets

(11) Veröffentlichungsnummer: **0 034 287**
**A1**

# (12) EUROPÄISCHE PATENTANMELDUNG

(21) Anmeldenummer: **81100670.9**

(22) Anmeldetag: **30.01.81**

(51) Int. Cl.³: **C 09 B 62/09**
D 06 P 3/66

(30) Priorität: **16.02.80 DE 3005840**

(43) Veröffentlichungstag der Anmeldung:
**26.08.81 Patentblatt 81/34**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Schaffer, Ortwin, Dr.**
**Bruesseler Ring 43**
**D-6700 Ludwigshafen(DE)**

## (54) Reaktivfarbstoffe.

(57) Die Erfindung betrifft Reaktivfarbstoffe, die in Form der freien Säuren der allgemeinen Formel I

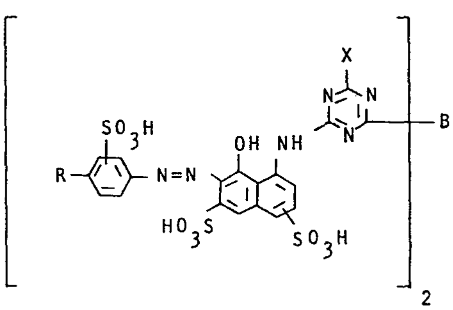

entsprechen, in de:
B eine Rest der Formel

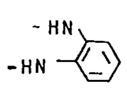 , 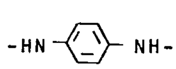 , 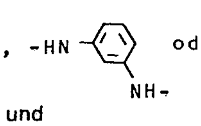 oder 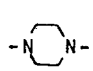 ,

R Methyl, Methoxy oder Äthoxy und
X Fluor, Chlor oder Brom sind.

Die erfindungsgemäßen Farbstoffe eignen sich vorzüglich zum Färben von cellulosischen Fasern.

EP 0 034 287 A1

Croydon Printing Company Ltd.

BASF Aktiengesellschaft O.Z. 0050/034298

## Reaktivfarbstoffe

Die Erfindung betrifft Verbindungen, die in Form der freien Säuren der allgemeinen Formel I

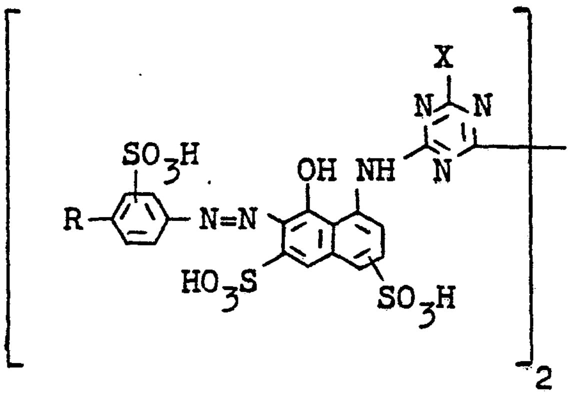

entsprechen, in der

B ein Rest der Formel

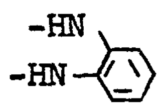 , 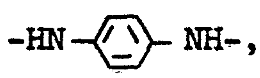 , 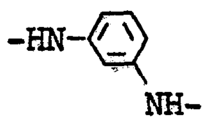 oder 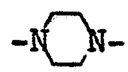 ,

R Methyl, Methoxy oder Äthoxy und

X Fluor, Chlor oder Brom sind.

Zur Herstellung der Verbindungen der Formel I kann man z. B. Verbindungen der Formel

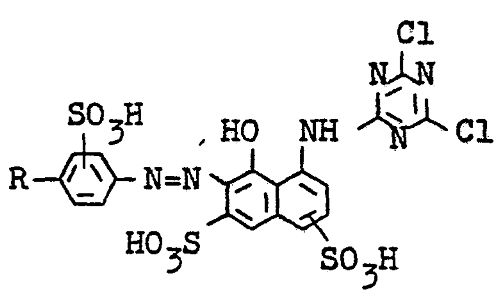

mit Verbindungen der Formel

$BH_2$

umsetzen.

Einzelheiten der Herstellung können den Beispielen entnommen werden, in denen sich Angaben über Teile und Prozente, sofern nicht anders vermerkt, auf das Gewicht beziehen.

Die Verbindungen der Formel I eignen sich vorzüglich zum Färben von hydroxylgruppenhaltigen Fasern, insbesondere von Cellulose. Man erhält licht- und naßechte Färbungen nach den für Reaktivfarbstoffe üblichen Heißfärbe-Verfahren. Die Farbstoffe sind sehr ausgiebig.

Von besonderer Bedeutung sind die Verbindungen der Formel I, bei denen der Rest

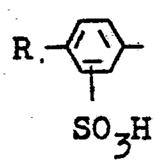

der Formel

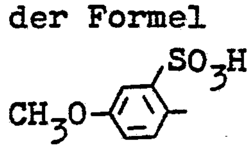 oder insbesondere 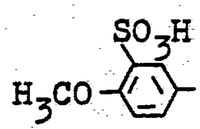 entspricht

und B = 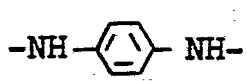 oder 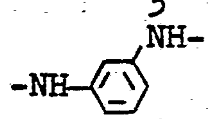 ist sowie die Kombination

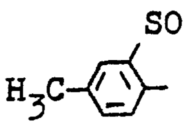 mit 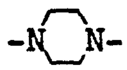 oder 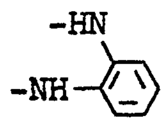, wobei die Sulfogruppen am Naphthalinring in 3,6-Stellung stehen.

X ist vorzugsweise Chlor.

## Beispiel 1

Die Suspension von 20,1 Teilen salzsauer diazotierter 2-Amino-5-methoxybenzolsulfonsäure wird zu einer Lösung von 46,8 Teilen des Monokondensationsproduktes aus Cyanurchlorid und 1-Amino-8-hydroxynaphthalin-3,6-disulfosäure gegeben und schwach sauer gekuppelt. Man fügt 5,3 Teile m-Phenylendiamin zu, erhöht die Temperatur auf 40 - 50 °C und hält durch konstante Zugabe von Natriumcarbonatlösung einen pH-Wert von 5,5 bis 6,5 ein. Der Farbstoff wird durch Zugabe von Kaliumchlorid abgeschieden und getrocknet. Er färbt Baumwolle in brillanten Bordotönen mit guter Naßechtheit.

## Beispiel 2

Einen Bordo-Farbstoff mit ähnlich guten Eigenschaften erhält man, wenn man die in Beispiel 1 verwendete 2-Amino-5-methoxybenzolsulfonsäure durch 3-Amino-6-methoxybenzolsulfonsäure und das verwendete m-Phenylendiamin durch p-Phenylendiamin ersetzt.

Beispiel 3

31,9 Teile 1-Amino-8-hydroxynaphthalin-3,6-disulfonsäure werden bei 0 °C mit einer Suspension von 18,8 Teilen Cyanurchlorid versetzt und kondensiert. Man filtriert vom überschüssigen Cyanurchlorid ab, fügt zur klaren Lösung eine salzsauer diazotierte Suspension von 18,5 Teilen 2-Amino-5-methylbenzolsulfonsäure zu und kuppelt essigsauer. Der erhaltene Dichlortriazinfarbstoff wird mit 4,2 Teilen Piperazin versetzt, die Temperatur auf 40 - 50 °C erhöht und durch konstante Zugabe von Natriumcarbonatlösung ein pH-Wert von 6 gehalten. Der Farbstoff wird mit Kaliumchlorid vollständig abgeschieden und getrocknet. Er färbt Baumwolle in brillanten blaustichig roten Tönen.

Beispiel 4

Einen Rotfarbstoff mit ähnlichen Eigenschaften erhält man, wenn man das in Beispiel 3 verwendete Piperazin durch 5,3 Teile o-Phenylendiamin ersetzt.

Weitere Farbstoffe, die auf einem der oben beschriebenen Wege erhalten werden können und die der allgemeinen Formel I entsprechen, sind in Tabelle 1 zusammengefaßt.

Tabelle 1

| Bsp. | Diazokomponente | Kupplungskomponente | X | B | Farbton |
|---|---|---|---|---|---|
| 5 | 2-Amino-5-äthoxybenzolsulfonsäure | 1-Amino-8-hydroxynaphthalin-3,6-disulfonsäure | Chlor | m-Phenylendiamin | bordo |
| 6 | 3-Amino-6-methoxybenzolsulfonsäure | 1-Amino-8-hydroxynaphthalin-4,6-disulfonsäure | " | p-Phenylendiamin | " |
| 7 | 3-Amino-6-äthoxy-benzolsulfonsäure | " | " | " | " |
| 8 | 2-Amino-5-methyl-benzolsulfonsäure | " | " | Piperazin | blaust. rot |

Patentansprüche

1. Reaktivfarbstoffe, die in Form der freien Säuren der allgemeinen Formel I

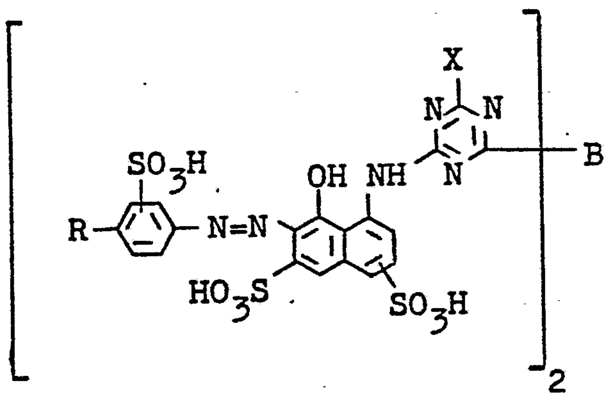

entsprechen, in der

B ein Rest der Formel

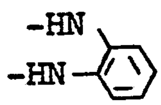 , 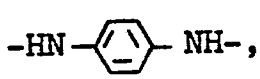 , 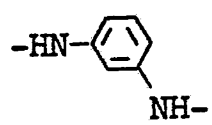 oder 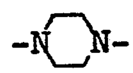 ,

R Methyl, Methoxy oder Äthoxy und

X Fluor, Chlor oder Brom sind.

2. Verwendung der Farbstoffe gemäß Anspruch 1 zum Färben von hydroxylgruppenhaltigem Textilmaterial.

Europäisches Patentamt

**EUROPÄISCHER RECHERCHENBERICHT**

0034287

Nummer der Anmeldung

EP 81 10 0670

## EINSCHLÄGIGE DOKUMENTE

| Kategorie | Kennzeichnung des Dokuments mit Angabe, soweit erforderlich, der maßgeblichen Teile | betrifft Anspruch |
| --- | --- | --- |
| | CH - A - 599 316 (CIBA-GEIGY)<br>* Patentanspruch; Unteransprüche 1-3 *<br>--- | 1,2 |
| | FR - A - 2 028 479 (ICI)<br>* Patentansprüche 1,4; Seite 5, Zeilen 9-25; Seite 6, Zeilen 21-23 *<br>& DE - A - 2 001 960<br>--- | 1,2 |
| | GB - A - 1 461 125 (ICI)<br>* Patentansprüche 1-4 *<br>---------- | 1,2 |

KLASSIFIKATION DER ANMELDUNG (Int Cl.)

C 09 B 62/09
D 06 P 3/66

RECHERCHIERTE SACHGEBIETE (Int Cl.)

C 09 B 62/09
62/08
62/04
62/03
62/026
62/022
62/02
62/01
62/006
62/002

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
| --- | --- | --- |
| Den Haag | 23.04.1981 | GINESTET |